(19) Europäisches Patentamt / European Patent Office / Office européen des brevets

(11) **EP 4 075 221 A1**

(12) **EUROPEAN PATENT APPLICATION**

(43) Date of publication:
**19.10.2022   Bulletin 2022/42**

(21) Application number: **22315086.3**

(22) Date of filing: **13.04.2022**

(51) International Patent Classification (IPC):
**G05B 19/418** *(2006.01)*   **G05B 13/02** *(2006.01)*
**B25J 9/16** *(2006.01)*

(52) Cooperative Patent Classification (CPC):
**G05B 19/41805; G05B 19/41885;** B25J 9/1671;
B25J 9/1697; G05B 13/0265; G05B 2219/31054;
G05B 2219/32085; G05B 2219/32359;
G05B 2219/32369; G05B 2219/32385;
G05B 2219/40532

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.04.2021   LU 102785**

(71) Applicant: **Dillygence SAS**
**78100 St Germain-en-Laye (FR)**

(72) Inventors:
• **Patchong, Alain**
  **78100 St Germain-en-Laye (FR)**
• **Dindin, Meryll**
  **78100 St Germain-en-Laye (FR)**

(74) Representative: **Mellet, Valérie Martine**
**Patent 42**
**5, rue Dicks**
**4081 Esch-sur-Alzette (LU)**

(54) **SIMULATION PROCESS OF A MANUFACTURING SYSTEM**

(57)   The invention provides a simulation process of a manufacturing system comprising a plurality of manufacturing stations which are configured for manufacturing workpieces; the simulation process comprising the steps of: inputting (110) operation data of the manufacturing system in a machine learning model in order to compute manufacturing data of the manufacturing stations; obtaining (112) a test configuration, of the manufacturing system; simulating (120) the manufacturing system manufacturing a workpiece depending on the manufacturing data, wherein the manufacturing system is arranged in the test configuration.

FIG. 6

## Description

## Technical field

The invention pertains to simulation solutions for manufacturing systems such as assembly lines. The invention provides a simulation process of a manufacturing system with a plurality of manufacturing stations configured for processing a workpiece, for instance in the automotive industry. The invention also relates to a simulation system for a manufacturing system. The invention also provides a training process of an algorithm used in a simulation process and a simulation system.

## Background of the invention

The automotive industry involves a plurality of product families which are processed through different technics. The sub parts are produced separately and then assembled in a final product, namely the vehicle or vehicle portions. These sub parts include structural elements, electronic components, energy storing means, safety components.

In order to foster quality and output, companies develop specific manufacturing systems for the sub parts and also for their step-by-step assembly. These manufacturing systems generally include several manufacturing stations wherein a workpiece is processed in order to change its chape or properties. It may be deduced from the former that a plurality of manufacturing systems is necessary for a whole vehicle. Each manufacturing system requires a dedicated fine tuning. A typical manufacturing plant in the automotive industry may comprise five hundred manufacturing stations to optimize simultaneously.

The improvement of a manufacturing system may be achieved by means of simulations. For this purpose, data corresponding to the whole manufacturing system must be collected. This operation is time consuming, and may be impractical when data of interest are not available. In addition, the obtained data do not consider bias, and contingency. In real operation, a manufacturing system is generally exposed to physical constraints. Inner and outer factors also influence the true functioning of the manufacturing system. It remains cumbersome to analyse the true capacities of a targeted manufacturing station in a manufacturing system since this manufacturing station of interest is subjected to "noise". Then, detecting failures from the latter becomes complicated since its performance depends on its environment, and notably of upstream or downstream manufacturing stations. For instance, the manufacturing station of interest may receive faulty workpiece. It may be belated due to an upstream workpiece shortage. As another example, in specific configurations, the manufacturing station operates in a reduced space, such that its motions are hindered.

The document US9811074B1 provides a system which includes a physically plausible virtual runtime environment to simulate a real-life environment for a simulated robot and a test planning and testing component to define a robotic task and generate virtual test cases for the robotic task. The test planning and testing component is further operable to generate virtual test cases for the robotic task, determine a control strategy for executing the virtual test cases, and create the physics-based simulated environment. The system further includes a robot controller operable to execute the virtual test cases in parallel in the physics-based simulated environment, measure a success of the execution, and store training and validation data to a historical database to train a machine learning algorithm. The robot controller continuously executes the virtual test cases and use the machine learning algorithm to adjust parameters of the control strategy until optimal test cases are determined.

The test planning and testing component is limited to determining a control strategy for executing the plurality of virtual test cases. However, the component does not provide relevant information since it is limited to intangible aspects of a plurality of robots. Then, the adjusted parameters are not satisfying.

The document US2020278657A1 provides an Artificial Intelligence Process Control (AIPC) for automatically detecting errors in a manufacturing workflow of an assembly line process, and performing error mitigation through the update of instructions or guidance given to assembly operators at various stations. In some implementations, the disclosed technology utilizes one or more machine-learning models to perform error detection and/or propagate instructions/assembly modifications necessary to rectify detected errors or to improve the product of manufacture. Training data used to generate a machine-learning model come from simulated data and/or from actual training data, in combination or separately. A machine-learning model, for example (a Reinforcement Learning agent can be built using the simulated data results.

However, this Artificial Intelligence Process Control provides simulated data of limited relevance since the input data involved in the simulation is not defined.

## Technical problem to be solved

It is an objective of the invention to present a simulation process, which overcomes at least some of the disadvantages of the prior art. In particular, it is an objective of the invention to ease the simulation of a manufacturing system.

## Summary of the invention

According to a first aspect of the invention it is provided a simulation process of a manufacturing system comprising a plurality of manufacturing stations which are configured for manufacturing reference workpieces;

the simulation process comprising the steps of: inputting operation data of the manufacturing system in a machine learning model in order to compute manufacturing data of the manufacturing stations; obtaining a test configuration, of the manufacturing system; simulating the manufacturing system manufacturing a reference workpiece depending on the manufacturing data, wherein the manufacturing system is arranged in the test configuration.

According to another aspect of the invention it is provided a simulation process of a manufacturing system comprising a plurality of manufacturing stations which are configured for manufacturing workpieces; the simulation process comprising the steps of: inputting operation data of the manufacturing system in a machine learning model in order to compute manufacturing data of the manufacturing station; obtaining a test physical configuration of the manufacturing system; simulating the plurality of manufacturing stations of the manufacturing system manufacturing a workpiece depending on the manufacturing data, wherein the manufacturing system is arranged in the test physical configuration.

Preferably, the simulation process further comprises a step of computing the operation data of the manufacturing stations by means of a digital representation associated with at least one moving entity in the manufacturing system, preferably with a plurality of animated digital representations of the plurality of manufacturing stations.

Preferably, the simulation process further comprises a step of obtaining video stream data of workpieces manufactured by the manufacturing system, said manufacturing system being arranged in an observed configuration; and a step of inputting the video stream data in a convolutional neural network in order to generate the digital representation.

Preferably, the step of inputting the video stream data is a step of inputting the video stream data in a convolutional neural network and generating an animated digital representation of moving entities in the manufacturing system with the convolutional neural network.

Preferably, the moving entities are the manufacturing stations.

Preferably, the at least one moving entity comprises a moving arm, such as a manufacturing arm or a transporting arm, cooperating with the workpiece; at the step of inputting the video stream data, the digital representation comprises a moving arm digital representation.

Preferably, the at least one moving entity comprises workpieces manufactured in the manufacturing system.

Preferably, the operation data comprise time series data, and the manufacturing data comprises cycle times.

Preferably, the time series data comprise, with respect to at least one of the plurality of manufacturing stations: the time duration since the last workpiece output, or the last manufacturing time duration, or a manufacturing station status such as a buffer status, or a time duration since the last interruption event, or the time duration of the last interruption event; and any combination thereof.

Preferably, the operation data comprises distance data, said distance data comprising distances (Dij) between manufacturing stations of the plurality of manufacturing stations.

Preferably, at the step of obtaining the video stream data, the observed configuration comprises a first distance set of distances between the manufacturing stations; and at the step of obtaining the test configuration, the test configuration comprises a second distance set of distances between the manufacturing stations.

Preferably, the second distance set is different from the first distance set.

Preferably, at the step of obtaining the video stream data, the observed configuration comprises a first orientation set of manufacturing station orientations; and at the step of obtaining the test configuration, the test configuration comprises a second orientation set of manufacturing station orientations, the second orientation set being different from the first orientation set.

Preferably, at the step of inputting the time series data, the manufacturing data comprise digital arm manufacturing data corresponding to the digital arm representation; and at the step of computing the workpiece manufacturing time, said manufacturing time is computed depending on the digital arm manufacturing data.

Preferably, at the step of obtaining video stream data, the transporting arm transports the successive workpieces to, and/or along, and/or in the manufacturing stations in accordance with a first manufacturing sequence; and at the step of computing the workpiece manufacturing time, the workpiece manufacturing time is computed depending on a second manufacturing sequence. Preferably, at the step of inputting the time series data, the manufacturing data comprise station manufacturing data corresponding to the manufacturing stations, optionally to each manufacturing station; and at the step of computing the workpiece manufacturing time, said manufacturing time is computed depending on the station manufacturing data.

Preferably, at the step of obtaining the video stream data, in the observed configuration, the manufacturing system comprises a first number of manufacturing stations; and at the step of obtaining the test configuration, the manufacturing system comprises a second number of manufacturing stations which is different than the first number.

Preferably, the observed configuration is a first configuration.

Preferably, the test configuration is a second configuration.

Preferably, at the step of obtaining the video stream data, in the observed configuration, the manufacturing stations comprise a first ensemble of station types; in the test configuration, the manufacturing stations comprise a second ensemble of station types, the second ensemble being enclosed in the first ensemble, and/or a sub ensemble of the first ensemble.

Preferably, at the step of computing a workpiece manufacturing time, the workpiece manufacturing time is a second workpiece manufacturing time; the process further comprising a step of computing a first workpiece manufacturing time corresponding to the observed configuration; and a step comparing the first workpiece manufacturing time and the second workpiece manufacturing time.

Preferably, the manufacturing data comprise workpiece transporting time between the manufacturing stations, notably from the first manufacturing station to the second manufacturing station, optionally by the transporting arm.

Preferably, the manufacturing data comprise workpiece processing times by the manufacturing station(s), for instance by the first manufacturing station.

Preferably, the manufacturing data comprise at least one station processing time during which a workpiece is processed by the corresponding manufacturing station.

Preferably, the time series data comprise arm representation time series data of the digital arm representation, the arm representation time series data comprising a still status and a motion status, at the step of inputting the time series data, the arm representation time series data are inputted in the machine learning algorithm in order to compute the manufacturing data.

Preferably, at the step of obtaining the video stream data, said video stream data is obtained by vision means at distance from the transporting arm and the manufacturing stations.

Preferably, the machine learning algorithm comprises a machine learning ensemble method. Preferably, the machine learning algorithm comprises a meta estimator.

Preferably, the simulation process comprises a step of identification of the transporting arm, and isolation of the transporting arm from the environment.

Preferably, at the step of inputting the video stream data, said digital arm representation comprises at least one arm node representing an arm articulation.

Preferably, the manufacturing data comprise time durations.

Preferably, the test configuration is a test physical configuration and/or a physical configuration of test.

Preferably, the manufacturing stations define first groups in the observed configuration, and a second group in the test configuration.

Preferably, the simulation process comprises a step of calibration in order to estimate the size of the transporting arm.

Preferably, the machine learning algorithm is a machine learning algorithm ensemble comprising a plurality of machine learning models.

Preferably, the manufacturing data comprise a time duration between two subsequent workpieces transported by the transporting arm, or one of the manufacturing stations.

Preferably, the video stream data comprise a plurality of transporting sequences wherein the transporting arm transports one of the workpieces from the first manufacturing station to the second manufacturing station.

Preferably, the time series data comprises state switches.

Preferably, the image data comprise 2D image data.

Preferably, the image data comprise 3D image data.

Preferably, the time series data may comprise motion data of the digital arm representation.

Preferably, the transporting arm comprises a forearm and an upper arm.

Preferably, the manufacturing arm is an articulated manufacturing arm.

Preferably, the manufacturing stations are at distance from one another.

Preferably, the manufacturing system comprises distances between the manufacturing stations, at the step of computing the manufacturing data, the distances are part of the input data. Preferably, the manufacturing arm comprises a tool configured for modifying the shape of the workpiece, or for assembling sub parts.

Preferably, the step of obtaining video stream data is a step of obtaining video stream data of at least one moving entity cooperating with successive workpieces manufactured by the manufacturing system.

Preferably, the operation data comprise temporal data.

Preferably, at the step of obtaining the video stream data, the moving arm executes cyclic operations, and/or cyclic moves, and/or periodical moves.

Preferably, the first manufacturing station and the second manufacturing station are different, preferably of different kind and/or with different manufacturing actions.

Preferably, each workpiece is a reference workpiece, and/or the workpiece are the same. Preferably, the operation data comprise a data dimension of at least: 5, or 8, or 10, or 12, or 15. Preferably, at the step of computing the operation data, the operation data is computed at least for the first manufacturing station and the second manufacturing station, preferably for each of the manufacturing station of the manufacturing system; by means of the arm digital representation. Preferably, the digital representation comprises a moving entity digital representation.

The step of obtaining video stream data and the step of inputting the video stream data are not essential aspects of the invention.

It is another aspect of the invention to provide a simulation process of a manufacturing system comprising a plurality of manufacturing stations which are configured for manufacturing workpieces transported by a transporting arm; the simulation process comprising the steps of:

> o obtaining video stream data of the transporting arm transporting successive workpieces to the manufacturing stations which define a observed configuration of the manufacturing system;
> o inputting the video stream data in a convolutional neural network algorithm in order to generate a digital arm representation;
> o computing time series data of the manufacturing system by means of the digital arm representation;
> o inputting the time series data in a machine learning algorithm in order to compute manufacturing data of the manufacturing stations in accordance with the observed configuration;
> o obtaining a test configuration of the manufacturing system;
> o computing a workpiece manufacturing time depending on the test configuration and the manufacturing data.

It is another aspect of the invention to provide a simulation system of a manufacturing system comprising a plurality of manufacturing stations which are configured for manufacturing workpieces transported by a transporting arm; the simulation system comprising vision means configured for acquiring a video data stream of the manufacturing system; and computing means configured for:

> o obtaining video stream data of the transporting arm transporting successive workpieces to the manufacturing stations which define a observed configuration of the manufacturing system;
> o inputting the video stream data in a convolutional neural network algorithm in order to generate a digital arm representation;
> o computing time series data of the manufacturing system by means of the digital arm representation;
> o inputting the time series data in a machine learning algorithm in order to compute manufacturing data of the manufacturing stations in accordance with the observed configuration;
> o obtaining a test physical configuration of the manufacturing system;
> o computing a workpiece manufacturing time depending on the test physical configuration and the manufacturing data; the computing means preferably being configured for executing the simulation process in accordance with the invention.

It is another aspect of the invention to provide a simulation system of a manufacturing system comprising a plurality of manufacturing stations which are configured for manufacturing workpieces; the simulation system comprising vision means configured for acquiring a video stream data of the manufacturing system; and computing means configured for:

> o inputting operation data of the manufacturing system in a machine learning model in order to compute manufacturing data of the manufacturing stations in accordance with an observed configuration;
> o obtaining a test physical configuration of the manufacturing system;
> o simulating the plurality of manufacturing stations (8) of the manufacturing system manufacturing a workpiece depending on the manufacturing data, wherein the manufacturing system is arranged in the test physical configuration; the computing means preferably being configured for executing the simulation process in accordance with the invention.

Preferably, the computing means are further configured for inputting the video stream data in a convolutional neural network in order to generate the digital representation of at least one moving entity in the manufacturing system; and further configured for computing operation data of the manufacturing stations by means of a digital representation. Preferably, the vision means comprise a plurality of camera units.

Preferably, the vision means comprise a lidar.

Preferably, the vision means comprise a three-dimensional camera configured for providing three-dimensional data.

Preferably, the simulation system comprises storing means.

It is another aspect of the invention to provide a training process of a machine learning algorithm for a simulation process in accordance with the invention.

It is another aspect of the invention to provide a training process of a machine learning algorithm in order to obtain a machine learning model for simulating a manufacturing system, said manufacturing system comprising a first manufacturing station and a second manufacturing station which are configured for processing a workpiece; the training process comprising the steps of:

> o obtaining video stream data of successive workpieces manufactured by the first manufacturing station and the second manufacturing station of the manufacturing system;
> o inputting the video stream data in a convolutional neural network in order to generate a digital representation of moving entities in the manufacturing system;
> o computing operation data, such as time series data and/or distance data; of the manufacturing system by means of the digital representation in order to generate training operation data and test operation data;
> o training a first machine learning algorithm by means of said training operation data in order to obtain a first machine learning model, associated with the first manufacturing station, for simulating the manufacturing system;

o testing the first machine learning model with test operation data;

o storing the first machine learning model if a loss, associated with the first machine learning model and the test operation data, meets a predefined criterion.

Preferably, the step of training machine learning algorithm, an extreme gradient boosting method is used.

Preferably, the machine learning algorithm comprises a plurality of weak learner algorithms, and weights associated with the weak learner algorithms.

Preferably, the machine learning model comprises a plurality of weak learner algorithms, and weights associated with the weak learner algorithms.

Preferably, the step of training comprises a Bayesian optimisation.

Preferably, the machine learning model comprises a machine learning ensemble.

Preferably, the step of training comprises the use of light boosted trees.

Preferably, the step of training comprises a sub step of comparison by means of dynamic time wrapping in order to compare the manufacturing data with respect to the predefined condition.

It is another aspect of the invention to provide a computer program comprising computer readable . code means, which when run on a computer, cause the computer to run the simulation process in accordance with the invention.

It is another aspect of the invention to provide a computer program product including a computer readable medium on which the computer program according to the invention is stored.

It is another aspect of the invention to provide a computer configured for carrying out the simulation process according to the invention.

The different aspects of the invention may be combined to each other. In addition, the preferable features of each aspect of the invention may be combined with the other aspects of the invention, unless the contrary is explicitly mentioned.

**Technical advantages of the invention**

The invention offers a simulation solution easy to implement. By observation of a manufacturing system, such as an assembly line, it become possible to assess the impact of the modification of this system. Each independent modification may be measured. Indeed, the invention offers an analysis of each manufacturing station, independently of each other and of environment constraints.

**Brief description of the drawings**

Several embodiments of the present invention are illustrated by way of figures, which do not limit the scope of the invention, wherein

- figure 1 provides a schematic illustration of a view of a manufacturing system in accordance with a preferred embodiment of the invention;
- figure 2 provides a schematic illustration of a top view of a manufacturing system in accordance with a preferred embodiment of the invention;
- figure 3 provides a schematic illustration of a top view of a manufacturing system in accordance with a preferred embodiment of the invention;
- figure 4 provides a schematic illustration of a digital arm representation of a simulation process in accordance with a preferred embodiment of the invention;
- figure 5 provides operation data of a simulation process in accordance with a preferred embodiment of the invention;
- figure 6 provides a schematic illustration of a diagram of a simulation process in accordance with a preferred embodiment of the invention;
- figure 7 provides a schematic illustration of a training process of a simulation process in accordance with a preferred embodiment of the invention;
- figure 8A provides a schematic illustration of observed cycle times of a manufacturing station of a manufacturing system;
- figure 8B provides a schematic illustration of manufacturing data of a manufacturing station of a manufacturing system as obtained by a simulation process in accordance with a preferred embodiment of the invention.

**Detailed description of the invention**

This section describes the invention in further detail based on preferred embodiments and on the figures. Similar reference numbers will be used to describe similar or the same concepts throughout different embodiments of the invention. For example, references 100 and 200 denote steps of obtaining data of processes in accordance with the invention.

It should be understood that the term "manufacturing" should be considered in its broadest meaning. It may be understood as a process on the workpiece. It may imply a property modification, and/or a shape modification. Manufacturing may also cover assembling sub elements. In the current specification, the term "workpiece" should be read in its broadest meaning. The workpiece may be understood as a raw element, a semi-finished product, a finished product. It may correspond to any intermediate state, from the begging, of a good. It may correspond to an element which is changed by a manufacturing station. The workpiece may designate an assembly, or spare parts which are assembled.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the simulation system in accordance with the invention is evidently powered by an electric supply, even though such supply is not explicitly referenced on the figures nor referenced in the description.

In the current patent application, the term "loss" corresponds to an error, to a function. The loss may be a loss function. It quantifies the difference between the output of a machine learning algorithm under training and a target value depending of an input. The loss may be computed in connection with training data and validation data as input data.

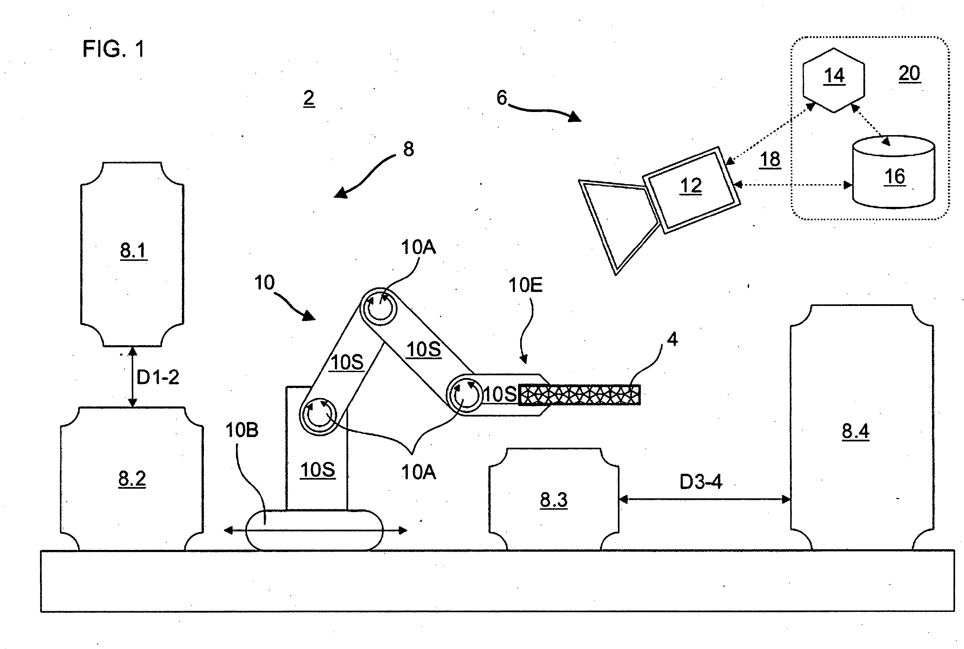

Figure 1 shows a manufacturing system 2 adapted for manufacturing a workpiece 4. A simulation system 6 is provided in order to compute simulations of the manufacturing system 2, for instance during operations.

The manufacturing system 2 includes a plurality of manufacturing stations 8, also designated as workstations 8. The manufacturing stations 8 may comprise, at least, a first manufacturing station 8.1, a second manufacturing station 8.2, a third manufacturing station 8.3 a fourth manufacturing station 8.4. The manufacturing stations are at distance from one another. The manufacturing stations are distributed along the manufacturing system 2. As an option, two manufacturing stations may be adjacent and/or stacked.

As an option, the first manufacturing station 8.1 is a buffer, the second manufacturing station 8.2 is a die sinking press, the third manufacturing station 8.3 is a milling machine, and the fourth manufacturing station 8.4 is a welding machine. Bending and cutting stations are considered. Other manufacturing machines, such as surface treatment stations are considered by the invention. The first station may be of a different kind than the second station. They may provide different manufacturing actions on the workpiece.

The current arrangement and positioning of the manufacturing stations 8 are purely illustrative. Their manufacturing actions as well. A manufacturing system 2 in accordance with the invention also provides a configuration with a plurality of manufacturing stations 8 with the same manufacturing function, of the same kind.

It will be apparent to the skilled reader that any configuration are considered.

The manufacturing system 2 comprises at least one moving entity, for instance a moving arm. The moving arm 10, such a transporting arm 10, interacts with the workpiece 4. It may transport the workpiece 4. The moving arm 10 comprises an arm end 10E receiving the workpiece 4. The moving arm 10 meets the workpiece 4. The arm end 10E may comprise holding means or clamping means, engaging with the workpiece 4. The arm end 10E are an arm portion. It is an arm extremity 10E. It may be a transporting end 10E or a manufacturing end.

The moving arm 10 is an articulated arm 10. The articulated arm 10 comprises a plurality of segments 10S and articulations 10A connecting the segments 10S. The moving arm 10; notably its segments 10S, defines a forearm and an upper arm. The articulations 10A allow motions between the segments 10S. Then, the moving arm is a pivoting arm. The articulations 10A may comprise pivot joints, ball joints, sliding joints. The moving arm 10 may comprise a fixed base 10B, or a driving base 10B moving from one manufacturing station 8 to another.

The moving arm 10 is configured for cooperating with the workpiece 4, for instance for handling the workpiece 4. It is adapted for bringing the workpiece 4 in the manufacturing stations 8. It may pick up the workpiece 4 in one manufacturing station 8 and introduce it in or move it into another manufacturing station 8 such that the workpiece 4 undergoes its very own manufacturing action. The moving arm 10 may be shared by different manufacturing systems (only one represented). The invention considers moving arm pooling.

The moving arm is not an essential aspect of the invention. It may be replaced by a conveyor, such as a conveyor belt, or a spiral conveyor, or a vibrating conveyor. As a further alternative or an option, it may be replaced by an automated guided vehicle. As an option, the manufacturing system comprises an automated guided vehicle with a moving arm.

In order to simulate, to monitor, and optionally to control, the manufacturing system 2, the simulation system 6 comprises vision means 12. The simulation system 6 further comprises computing means 14 and storing means 16. The simulation system 6 comprises a communication network 18 connecting the vision means 12, the computing means 14 and the storing means 16. The communication network 18 is a wired and/or wireless network.

The computing means 14 and storing means 16 are in a computer unit 20. The storing means 16 are or comprise a computer readable medium 16, also designated as memory element 14.

The computing means 14, also designated as processing means, comprise a data processor, such as a central processing unit, CPU, of a computing device. The data processor is programmed by appropriately formulated software code to implement the process steps as detailed below. The computing means 14 comprise at least one processor, for instance a plurality of connected processors. The plurality of processors operates in parallel in order to train a machine learning algorithm, and/or for computer vision tasks.

The memory element 14 comprises at least one or all of the following: a Random-Access Memory, RAM, module, or a persistent storage device such as a Hard Disk Drive, HDD, or a Solid-State Drive, SSD.

The vision means 12 comprise a plurality of 2D camera units (only one represented). As an option or an alternative, the vision means 12 comprise a three-dimension camera device, configured for 3D vision, they are configured for providing 3D image data. Then, the computing means 14 are less used.

The vision means 12 optionally comprise a LIDAR. The LIDAR projects light from a laser on the workpiece 4 and/or the moving arm 10. Analysing the light reflection allows for distances computation. Then; an accurate shape of the workpiece and/or the moving arm 10 is obtained in real time. As an option the vision means 12 comprise a 3D camera, also designated as a three-dimensional camera.

The vision means 12 are at distance from, and/or separate and distinct of, the moving arm 10 and from the manufacturing stations (8.1-8.4), preferably from each manufacturing station (8.1-8.4) of the manufacturing system 2. Generally, the vision means 12 are at distance, and/or outside, the moving entities of the manufacturing system 2.

During manufacturing, or more generally during operation, the vision means 12 acquire video stream data. The video stream data enclose motion sequences of the moving arm 10 and the workpiece 4 when it travels in the manufacturing stations 8 due to the action of the moving arm 10. The video stream data are stored temporarily on the storing means 16. It is computed by the computing means 14. It is deleted depending on the computing result. Hence, storage resources is saved.

The computing means 14 are, notably the computer unit 20 is, configured for obtaining video stream data of a moving arm cooperating with successive workpieces manufactured by the manufacturing system 2; the moving arm exhibiting an arm end cooperating with the workpieces successively; inputting the video stream data in a convolutional neural network algorithm in order to generate an arm digital representation of the moving arm motions; computing operation data of the manufacturing system by means of the arm digital representation; inputting the operation data in a machine learning model in order to compute manufacturing data; generating a signal if the manufacturing data meet a predefined condition.

The machine learning model is an algorithm implementing a machine learning technique. Machine learning is a process using computational techniques to enable systems to learn from data or experience. Machine learning is a type of AI that gives computers the ability to learn and act without being explicitly programmed. This means that the computer model gets better over time by learning from its mistakes and new experiences (being exposed to new data), usually improving its performance. If a computer program can improve how it performs certain tasks that are based on past experiences, then it has learned. Machine learning refers to a set of methods that automatically detect patterns in data, and then use these patterns to predict future data, or to perform other kinds of decision making. Patterns may relate to correlations, causal relationships, or categories of data objects.

Generally, the machine learning model is the output of the training process of a machine learning algorithm. It is a mathematical representation of the output. The machine learning model provides a prediction.

The convolutional neural network (CNN) is a feed forward neural network which is using convolution instead of matrix multiplication in at least one his layers. The feed forward neural network is an artificial neural network where information is feed from the input to the output in one direction only. It understood that the neural network is a network of primitive processing elements connected by weighted links with adjustable weights, in which each element produces a value by applying a nonlinear function to its input values, and transmits it to other elements or presents it as an output value.

The convolutional neural networks are well-known to the person skilled in the art and are described for example in "Machine Learning_ A Probabilistic Perspective; from Kevin P. Murphy ; 2012-08-24; ISBN 978-0-262-01802-9.The computing means 14 and/or the computer unit 20 are/is configured for carrying out a simulation process in accordance with the invention. The computing means 14 and/or the computer unit 20 are/is configured for carrying out a simulation process in accordance with the invention.

The manufacturing system 2 comprises distances D between the manufacturing stations (8.1-8.4). The distances comprise a distance D1-2 between the first manufacturing station 8.1 and the second manufacturing station 8.2. The distances comprise a distance D3-4 between the third manufacturing station 8.3 and the fourth manufacturing station 8.4. Other distances Di-j are defined by other pairs of manufacturing stations, where the indicia "i" and "j" correspond to the numbers of the manufacturing stations. The distances Di-j comprise horizontal and/or vertical components.

In order to monitor, and optionally to control, the manufacturing system 2, the simulation system 6 comprises vision means 12. The simulation system 6 further comprises computing means 14 and storing means 16. The simulation system 6 comprises a communication network 18 connecting the vision means 12, the computing means 14 and the storing means 16.

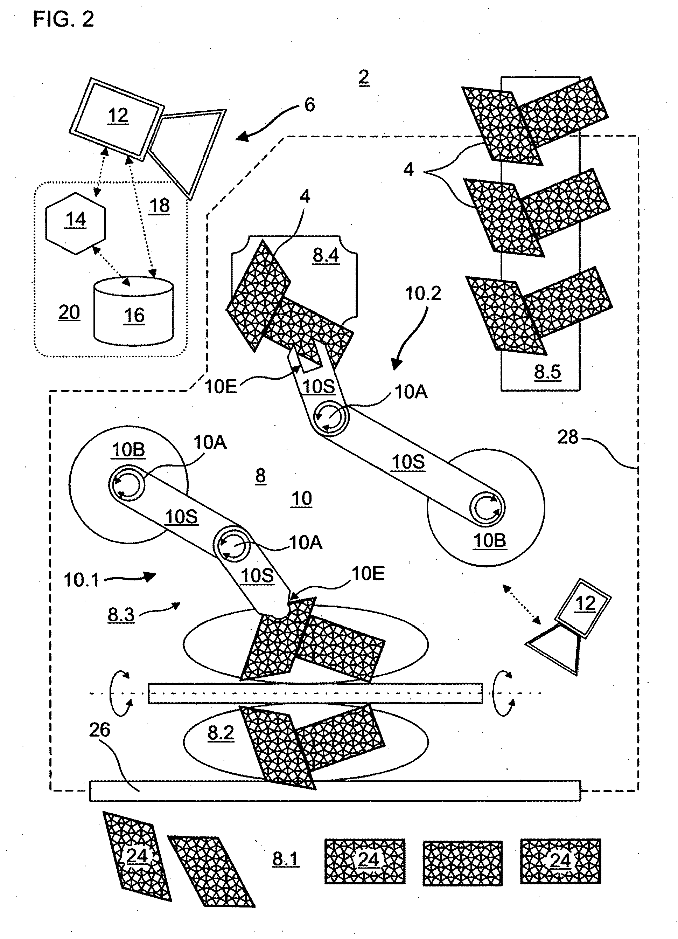

Figure 2 shows a manufacturing system 2 adapted for processing a workpiece 4, for instance for assembling sub parts 24. A simulation system 6 is provided in order to simulate the manufacturing system 2 with a data acquisition during operations. The manufacturing system 2 is similar to the one as described in relation with figure 1. The current figure is a plan view.

The manufacturing system 2 includes a plurality of manufacturing stations 8. The manufacturing stations 8 comprise, at least, a first manufacturing station 8.1, a second manufacturing station 8.2, a third manufacturing station 8.3 a fourth manufacturing station 8.4 and a fifth manufacturing station 8.5. Further manufacturing stations may be added. The manufacturing stations (8.1-8.5) are at distance from one another. The manufacturing stations are distributed in the area of the manufacturing system 2.

As an option, two manufacturing stations are adjacent. As a further option, at least one of the manufacturing stations 8 is a buffer. The buffer 8.1 stores the sub parts 24 before assembly. The buffer 8.1 exhibit a capacity, corresponding to a maximum number of elements therein. The sub parts 24 are of different shapes, and/or have different properties. As an option, the manufacturing system 2 comprises a curtain 26 isolating the moving parts, for instance for safety reasons and quality requirements. The curtain 26 may move up and down in order to isolate the sub parts 24, and forms an inlet. It is in an open status and in a closed status. The manufacturing system comprises a fence 28 around its the moving entities, the curtain 26 forming a door or a window in said fence 28.

The second manufacturing station 8.2 may be an assembly support, for instance with holding means which are configured for maintaining the sub parts 24. As an option, the second manufacturing station 8.2 may be a rotating support, with two manufacturing zones which are selectively turned or flipped, toward the buffer 8.1 or the next manufacturing station(s) (8.3-8.5). The third manufacturing station 8.3 may be a welding machine. The welding machine is adapted for welding the workpiece 4, and more precisely two sub parts 24 in order to joint them to each other. The sub parts 24 are welded on the second manufacturing station 8.2. The third manufacturing station 8.3 is actually considered as; and/or comprises; a moving arm 10. A moving arm 10 equips one of the manufacturing stations 8. This moving arm 10 is designated as first arm 10.1 or manufacturing arm. The arm end 10E may be a welding end, or a welding device. The arm end 10E may comprise a clinching device. The moving arm 10 engages the workpieces 4 one after the other. The workpieces 4 successively cooperate with the first moving arm 10.1. The moving arm 10 physically touches the sub parts 24 and the workpieces 4.

The third manufacturing station 8.3 comprises an arm base 10B, a plurality of arm segments 10S which are joined by arm joints, or arm articulations 10A. Hence, during operation, the third manufacturing station 8.3 performs arm motions acquired by the simulation system 6.

The manufacturing system 2 further comprises a second moving arm 10.2. The second moving arm 10.2 may be a transporting arm. The second moving arm 10.2 comprises an arm base 10B, a plurality of arm segments 10S which are joined by arm articulations 10A. Its arm end 10E is a clamp adapted for holding the workpiece 4, and for transporting it from the third manufacturing station 8.3 to the fourth manufacturing station 8.4; or elsewhere. The fourth manufacturing station 8.4 is a welding station adapted for adding welding spots to the sub parts 24. In addition, the fourth manufacturing station 8.4 comprises other manufacturing means, adapted for coating, cutting, bending the workpiece 4. As an option, the third manufacturing station 8.3 and the fourth manufacturing station 8.4 are swapped, or duplicated.

At least one of the manufacturing stations 8 is a fixing station, adapted for fixing sub parts 24. The second moving arm 10.2 may be further adapted for moving the workpiece from the fourth manufacturing station 8.4 to the optional fifth manufacturing station 8.5. The fifth manufacturing station 8.5 may be a conveyor belt bringing the workpiece 4 outside the manufacturing system 2, for instance toward a next manufacturing system (not represented). In order to monitor, and optionally to control, the manufacturing system 2, the simulation system 6 comprises vision means 12. For instance, several camera units are provided at opposite sides or corners of the manufacturing system 2. The vision means 12 are arranged outside the fence 28. The vision means 12 are in elevation with respect to the manufacturing stations 8. Thus, implementing the simulation system 6 does not disturb the manufacturing system 2, and avoids damages since it remains protected by said fence 28.

The simulation system 6 further comprise computing means 14 and storing means 16. The simulation system 6 comprises a communication network 18 connecting the vision means 12, the computing means 14 and the storing means 16. The computing means 14 and storing means 16 are in a computer unit 20. The storing means 16 are or comprise a computer readable medium 16. The computing means 14 are configured for obtaining video stream data of a moving arm cooperating with successive workpieces manufactured by the manufacturing system; the moving arm exhibiting an arm end cooperating with the workpieces successively; inputting the video stream data in a convolutional neural network algorithm in order to generate an arm digital representation of the moving arm motions; computing operation data of the manufacturing system by means of the arm digital representation; inputting the operation data in a machine learning model in order to compute manufacturing data; generating a signal if the manufacturing data meet a predefined condition.

The computing means 14 are configured for carrying out a simulation process in accordance with the invention. The computing means 14 are configured for carrying out a classification process in accordance with the invention.

Then, the invention enables an accurate simulation of the manufacturing system, which runs in real time. By analysing the arm motions, the system and process observe the entire system 2, and deduce actions imposed to the workpiece 4. A result is obtained in real time, or in a few hours where the system comprises more than one hundred manufacturing stations. More precisely, the system and process obtain time related data, and distance data where applicable, relating the moving arm. From the former, the invention infers data at the manufacturing station level. The invention enables an automatic identification of data proper to each manufacturing station behaviour. In other words, the invention isolates the manufacturing stations and computes their time data and/or distance data. If one of the pieces of data matches one condition, a signal is emitted. This is used for detecting a dysfunction in the manufacturing system, or a defect on the workpiece.

The invention also furnishes solutions in the context of a manufacturing plant combining several manufacturing systems in accordance with figure 1, and several manufacturing systems in accordance with figure 2. Such a manufacturing plant includes a plurality of inlet for raw material or sub parts, and converges into at least one outlet for finished or semi-finished products. The simulation process and the simulation system focus on the whole manufacturing plant, or on several preselected manufacturing systems.

Moreover, the vision means 12 are installed and moved several times in order to observe the manufacturing plant in different steps, iteratively. Thus, a simulation system with a reduced number of camera units is implemented independently of the complexity of the manufacturing system. In addition, the computer program allowing monitoring remains the same as it applies the same rules. The simulation system generates machine learning models for each manufacturing station. The manufacturing system and/or the manufacturing plant comprises at least: 100, or 300, or 500 manufacturing stations; these manufacturing stations are monitored by the monitoring system and/or the vision means acquire video stream data of these manufacturing stations.

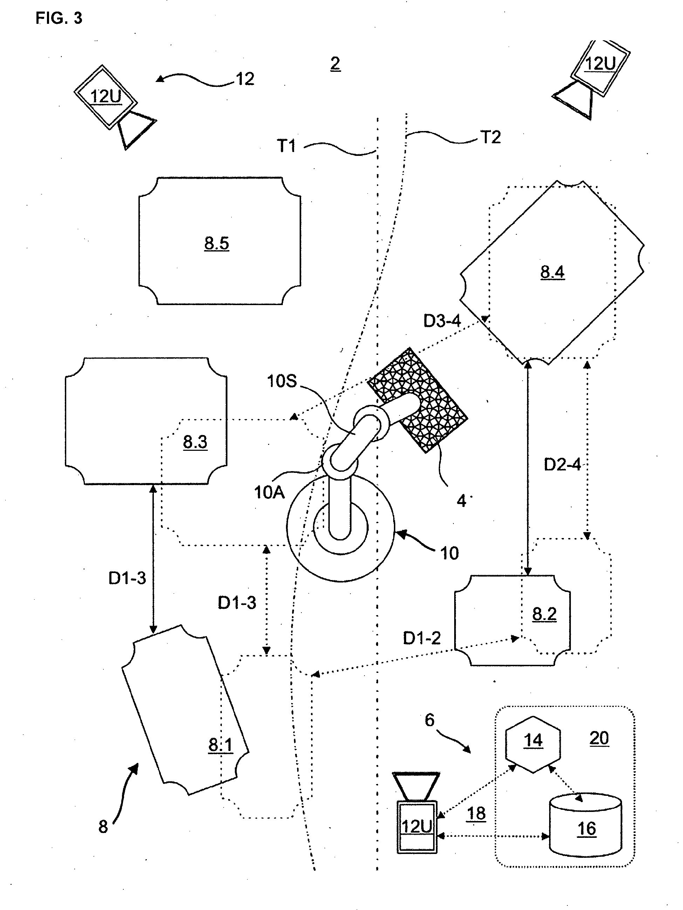

Figure 3 shows a top view of a manufacturing system 2 adapted for processing a workpiece 4. The manufacturing system is similar or identical to the one as described in relation with figures 1 or 2. The top view is considered as a fish eye view, or an aerial view. The manufacturing system 2 is represented in accordance with a so-called observed configuration wherein the manufacturing stations (8.1-8.4) are drawn in dashed lines; and in accordance to a so-called test configuration wherein the manufacturing stations (8.1-8.5) are drawn in solid lines. The observed configuration is a tangible configuration, a real configuration, whereas the test configuration may be a simulated configuration, such as a projected simulation. The observed configuration may generally be first configuration, or a reference configuration. The test configuration may generally be a second configuration, or an investigated configuration.

The simulation system 6 comprises vision means 12. The vision means comprise camera units 12U which are around the manufacturing system 2, preferably around the transporting arm 10 or generally around mobile entities. Then, it is configured for acquiring video data stream of the workpiece 4 and/or the transporting arm 10; in both configurations. The camera units 12U are connected to the computing means 14 and the storing means 16 by means of the communication network 18. The camera units 12U capture maximum angles. They are synchronized.

The transporting arm 10 may be fixed with respect to the ground of the manufacturing system 2. The lengths of the different arm segments 10S and the arm articulations 10A are adapted such that the transporting arm 10 reaches the manufacturing stations (8.1-8.4). The manufacturing stations (8.1-8.4) (represented with dotted) cooperate with the workpiece 4. The workpiece 4 is processed by the manufacturing stations (8.1-8.4).

As an alternative or in addition, the transporting arm 10 is movable along and/or through the manufacturing system 2. In the observed configuration, the transporting arm 10 moves along the first track T1. The first track T1 allows the transporting arm 10, or the conveying means, to reach the manufacturing stations (8.1-8.4) in the observed configuration. Further, the manufacturing stations (8.1-8.4) in accordance with the observed configuration are arranged with first orientations. As first set of orientations defines the orientations of the manufacturing stations (8.1-8.4). In the test configuration, the transporting arm 10 may move, may drive, along the second track T2. The second track T2 differs from the first track T1. The second track T2 is inclined with respect to the first track T1. The second track T2 may be longer than the first track T1. The second track T2 may generally be arcuate, whereas the first track T1 may be essentially straight. The second track T2 comprises more segments, and/or more turns than the first track T1.

The current figure also illustrates the manufacturing stations (8.1-8.5) in accordance with the test configuration. With respect to the observed configuration, the manufacturing system 2 differs on the arrangement of the manufacturing stations (8.1-8.5). As an option, the manufacturing system 2 comprises the same number of manufacturing stations (8.1-8.4) in the observed configuration and in the test configuration.

As an option, the number of manufacturing stations (8.1-8.5) varies between the observed configuration and the test configuration. By way of illustration, the test configuration may comprise more manufacturing stations (8.1-8.5) than the observed configuration. As an example, the third manufacturing station 8.3 is duplicated. Accordingly, a fifth manufacturing station 8.5 is added. The fifth manufacturing station 8.5 may be adjacent to the third. Duplicating one of the manufacturing stations is relevant when it forms a bottleneck in the manufacturing system 2. In such a case, this bottleneck station is the slowest one and penalized the other manufacturing stations (8.1, 8.2, 8.4). As an option, the kinds or type of manufacturing stations of the test configuration are enclosed in those of the observed configuration.

As an option, the respective positions of the manufacturing stations (8.1-8.4) vary between the observed and the test configuration. The positions may be defined by distances (D1-2, D1-3, D2-4, D3-4) between the manufacturing stations (8.1-8.4). The distances Di-j may be defined on the envelopes of the manufacturing stations (8.1-8.4), or with respect to their centres. The first distances define a first set of distances Di-j between the manufacturing stations 8i-j in the observed configuration. In the test configuration, the distances define a second distance set between the manufacturing stations, the second distance set being different from the first distance set. Distances Di-j may be increased or shorten from one configuration to another. A distance Di-j may be suppressed when two stations 8i-j become stacked in the test configuration. On the contrary, a distance Di-j may be created when two stacked stations of the observed configuration become at distance in the test configuration.

Providing or obtaining a test configuration optionally comprises modifying the orientations of the manufacturing stations (8.1-8.4). At least one manufacturing station is pivoted by comparison with the observed configuration. The observed configuration comprises a first set of manufacturing station orientations, and the test configuration comprises a second set of manufacturing station orientations, the second set being different from the first set. As an example, the first manufacturing station 8.1 is pivoted of 20°, the second manufacturing station 8.2 is pivoted of 90°, the fourth manufacturing station 8.4 is pivoted of 45°. As an optional exception, the third manufacturing station 8.3 keeps it initial orientation.

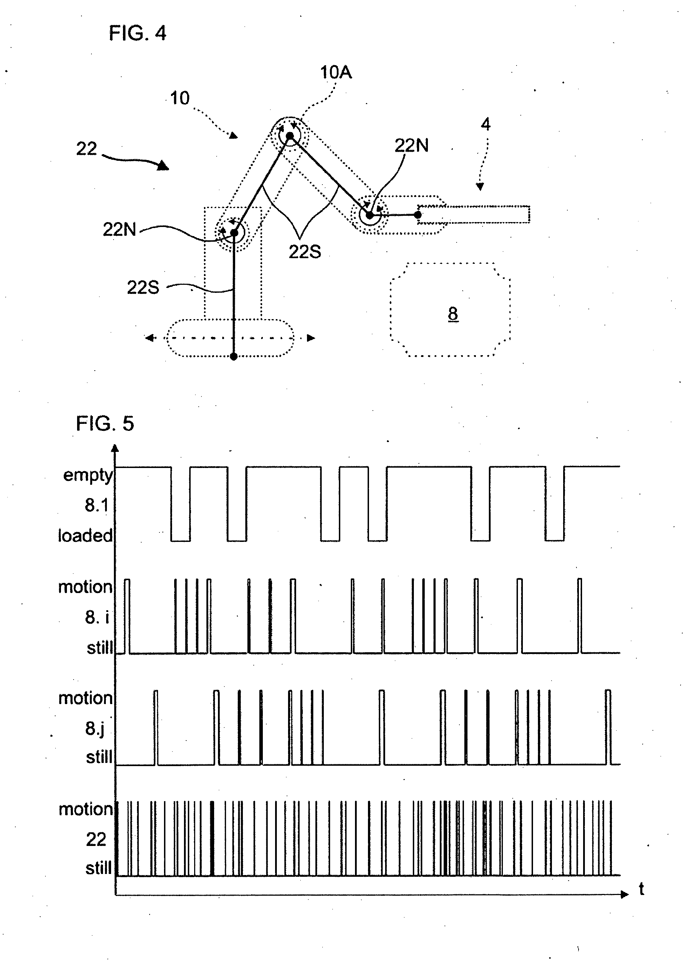

Figure 4 shows a digital arm representation 22 of a manufacturing system in accordance with the invention. The manufacturing system is similar or identical to manufacturing system presented in the previous figures. An illustrative manufacturing station 8 (in dashed lines) is provided.

Figure 4 may correspond to an image of an animation as displayed on a display unit. Figure 4 may correspond to a partial view of a user terminal with a display screen.

The digital arm representation 22 includes arm node representations 22N and segment representations 22S. These node representations 22N and segment representations 22S are virtual ones, generated by computer. The arm nodes 22N may correspond to the arm articulations 10A of the transporting arm 10 (represented with a dashed line). The digital arm representation 22 is an articulated animation. The digital arm representation 22 offers a simplified model of the transporting arm 10. Executing processing on this simplified model requires less computing resource. This transformation of the real transporting arm 10 into a digital arm representation 22 involves a computing step. Yet, it is configured for keeping motion data which is relevant for analysing the behaviour of the transporting arm 10, and for a fine understanding of the manufacturing system. The digital arm representation 22, or more generally the moving entity digital representation, is obtained through computer vision. A convolutional neural network (CNN) may be used.

Figure 5 provides a schematic illustration of operation data, such as time series data, of a manufacturing system in accordance with the invention. The manufacturing system is similar or identical to those as described in relation with the previous figures. The operation data comprise temporal data. Preferably, the operation data are temporal data.

The time series data may correspond to events observed by the vision means. The time series data may correspond to events occurring in the manufacturing system, at least partially. The time series data may illustrate states of moving parts depending on time (t).

The time series data may comprise data relating to the first manufacturing station 8.1, for instance the buffer. The buffer may be empty when there is no workpiece inside, or loaded when the buffer encloses at least one workpiece. The buffer may be empty because it waits for the next workpiece coming from an upstream manufacturing station, or from another manufacturing system.

The time series data may comprise data related to other manufacturing stations 8.i and 8.j, where the indicia "i" and "j" corresponds to other manufacturing stations, for instance the third and the fourth, or the second and a fifth. Other number are considered. The manufacturing stations 8.i and 8.j may comprises moving parts in order to transform, to change, or to process the workpiece. Depending on the actions of the manufacturing stations 8.i and 8.j, the latter may be in a still state where they stop, or in motion when they move or operate, or actively process the workpiece. Another line illustrates time series data associated with the digital arm representation 22. The current curve illustrates the still state of the digital arm representation 22, and its states when it moves. The motion state may be when none of its segments and nodes moves. This may occur when the transporting arm maintains the workpiece at a fixed location in a manufacturing station. It may also occur when the transporting arm, the real one as the virtual one 22, waits for a next workpiece, or waits when a workpiece is left free in one of the manufacturing stations.

The time series data may be used for computing cycle times, for instance with respect to each manufacturing stations.

Position data may be derived from figure 1-5. Distance data may be derived from figure 1-5. Indeed, the ordinate may correspond to distance between the moving arm and a reference point. Accordingly, figure 5 generally illustrates the operation data.

In the current illustration, only four curves related to manufacturing stations are provided. However, the invention considers time series data with data for more manufacturing stations.

In addition, motions and stated of the workpiece may also be used in order to workpiece compute time series data.

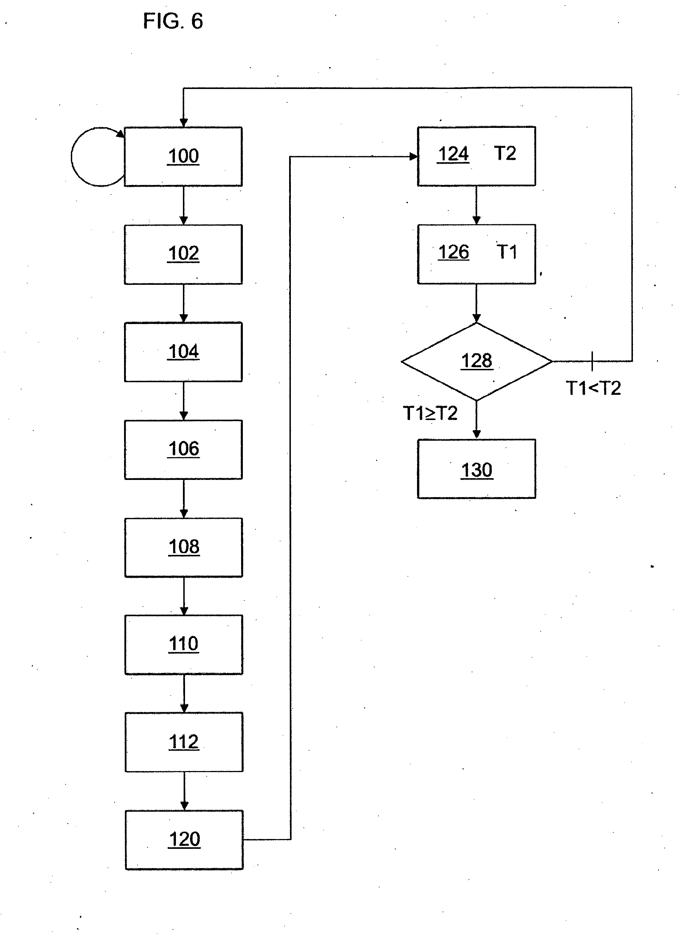

Figure 6 provides a diagram of a simulation process in accordance with the invention. The simulation process is adapted for simulating a manufacturing system which is similar or identical to the ones as detailed in relation with the previous figures.

The simulation process comprises the following steps, notably executed as listed below:

    o obtaining 100 video stream data of moving entities in the manufacturing system, for instance video stream data of the transporting arm transporting successive workpieces to the manufacturing stations, the manufacturing system defining a observed configuration of the manufacturing system;

o calibration 102 in order to set the size of the transporting arm, or other moving entities;

o identification 104 of the transporting arm, and isolation of the transporting arm from the environment, or other moving entities;

o inputting 106 the video stream data in a convolutional neural network algorithm in order to generate a digital representation, said representation comprising the arm transport motions, or more generally a digital representation of moving entities in the system;

o computing 108 the operation data in a machine learning algorithm in order to compute manufacturing data of at least one, or the, or each manufacturing station by means of the teaching drawn from the observed configuration;

∘ inputting 110 the operation data, such as the time series data, in a machine learning algorithm in order to compute manufacturing data of the manufacturing stations in accordance with the observed configuration;

o obtaining 112 a test configuration of the manufacturing system;

o simulating 120 the manufacturing system manufacturing a workpiece, wherein the system in accordance with the test configuration, depending on the operation data;

o computing 124 a workpiece manufacturing time, notably a second workpiece manufacturing time T2, depending on the test configuration and the manufacturing data;

o computing 126 a first workpiece manufacturing time T1 corresponding to the observed configuration;

o comparing 128 the first workpiece manufacturing time and the second workpiece manufacturing time;

o generating 130 a signal if the second workpiece manufacturing time is shorter than the first workpiece manufacturing time.

At the step of obtaining 100 the video stream data, the transporting arm brings and/or introduces the workpiece(s) in each manufacturing station. If drives the workpieces across the manufacturing system in accordance with a predefined sequence.

At the step of obtaining 100 the video stream data, the observed configuration comprises a first distance set between the manufacturing stations. The first distance set may be defined in relation with several stations. The first distance set may be a matrix defining each distance from each station with respect to each other station. At the step of obtaining 112 the test configuration, the test configuration comprises a second distance set of distances between the manufacturing stations. The second distance set may be defined as with respect to the first distance set. The second distance set may be different from the first distance set. A distance Di-j in the second set differs from the same distance Di-j in the first set. A same distance is understood with the same indicia; thus corresponding to the stations. As a consequence, one of the manufacturing stations is moved. It may be lifted or offset or swivelled.

At the step of obtaining 100 the video stream data, the observed configuration comprises a first orientation set of manufacturing station orientations. The orientation may be defined with respect to a reference point in the manufacturing station. An orientation of a manufacturing station may be defined in relation with a reference face, it may be pivoted for the purpose of the test configuration. At the step of obtaining 112 the test configuration, said test configuration comprises a second orientation set of manufacturing station orientations. The second orientation set differs from the first orientation set. At least one orientation of one of the manufacturing stations is changed, tuned, in the test configuration. At least one manufacturing station is pivoted, or turned.

At the step of inputting 110 the operation data such as the time series data, the manufacturing data comprise digital arm manufacturing data corresponding to the digital arm representation. Thereafter, at the step of computing 126 the workpiece manufacturing time T2, said manufacturing time is computed depending on the digital arm manufacturing data. This improves the accuracy of the result, and reduces the computation cost as the arm model is a simplified one. At the step of inputting 110 the operation data, the operation data are the input of the machine learning model, and the manufacturing data is the output. The operation data preferably comprise temporal data. Optionally, at the step of obtaining 100 video stream data, the transporting arm transports the successive workpieces to the manufacturing stations in accordance with a first manufacturing sequence. Each workpiece meets the manufacturing stations in a first order. At the step of computing 126 the workpiece manufacturing time T2, the workpiece manufacturing time T2 is computed while taking in account on a second manufacturing sequence, for instance provided at step obtaining 112 the test configuration. There, the workpiece meets the manufacturing stations in a second order. The order of two manufacturing station may be swapped. One of the manufacturing stations may be removed, disabled.

The step of calibration 102 may be a step of obtaining size data.

The step of identification 104 may be executed during the step of inputting 106 the video stream data. The step of isolation may comprise a background removal. The step of background removal uses a computer algorithm. This computer algorithm is adapted for extracting movement. It allows detection of moving parts; notably: the workpiece, the manufacturing stations when they enclose moving parts, and the optional moving arm. The computer algorithm identifies moving pixels, and associate the moving pixels to a specific object, such as a moving arm portion, or a portion of a manufacturing station, or the workpiece, or any other moving entity in the manufacturing system. The moving pixels may be linked to an entity depending on their momentum, such as their linear momentum. A solution involving mass centres may be used.

The step of inputting 106 the video stream data is preferably a step of inputting 106 the video stream data in a convolutional neural network and generating an animated digital representation of moving entities in the manufacturing system with the convolutional neural network.

The step of inputting 106 the video stream data may be a step of inputting 106 the video stream data in a convolutional neural network and generating an animated digital representation of moving entities in the manufacturing system with the convolutional neural network. The step of inputting 106 the video stream data may comprise identifying the distinct manufacturing stations, or obtaining the number of distinct manufacturing stations. The step of inputting 106 the video stream data may comprise obtaining the number of nodes of the manufacturing stations of the manufacturing stations. The step of inputting 106 the video stream data comprises inferring positions of nodes of the moving entities, recognizing movements of the nodes of the manufacturing stations, and generating an animated digital representation of moving entities; preferably the manufacturing stations; of the manufacturing system; with a convolutional neural network. The step of inputting 106 the video stream data is preferably executed with respect to each manufacturing station. The animated digital representation comprises an animation for each of the manufacturing stations. The step of inputting 106 the video stream data may use the solution 3D animate from company Deepmotion, or the solution from the company Radical, wherein the model is trained to recognise motions of manufacturing stations instead of humans. The manufacturing stations may be predefined manufacturing stations. Other solutions are considered. At the step of inputting 106 the video stream data, a pose estimator may be used.

The step of identification 104 may comprise rules in order to distinguish immobility, or motion from immobility. These rules use motion thresholds.

At the step of inputting 106, the digital representation, such as the arm digital representation, may be an animated representation. The digital representation may comprise a moving entity digital representation.

At the step of inputting 110 the time series data, the manufacturing data comprise station manufacturing data corresponding to the manufacturing stations. Each manufacturing station may be associated with one piece of data of the manufacturing data. At the step of computing 124 the workpiece manufacturing time, said manufacturing time is computed depending on the station manufacturing data.

At the step of obtaining 100 the video stream data, in the observed configuration, the manufacturing system comprises a first number of manufacturing stations, for instance four. At the step of obtaining 112 the test configuration, the manufacturing system comprises a second number, for instance five, of manufacturing stations which is different than the first number. Then, the number of manufacturing station may increase. Thus, it is interesting to notice that the invention offers an analysis of manufacturing system where the number of station changes.

At the step of obtaining 100 the video stream data, in the observed configuration, the manufacturing stations comprise a first ensemble of station types. By contrast, in the test configuration, the manufacturing stations comprise a second ensemble of station types; the second ensemble being enclosed in the first ensemble. Then, data used in the process is obtained by its own measures and analyses. The invention does not require data from outside. This ensures accurate results as the input data is tailored to the observed situation; namely the physically available configuration.

As an option, the manufacturing data comprise a workpiece processing time, such as a manufacturing time, by at least the first manufacturing station by way of illustration, or any of the other manufacturing stations. The predefined condition may comprise a time threshold, such as a station time threshold. If the if the second workpiece manufacturing time is shorter than the first workpiece manufacturing time, their difference preferably being longer than a threshold, it implies that a fast-manufacturing process occurred. Faster manufacturing conditions are identified.

As an option or an alternative, the manufacturing data comprise a time duration between two successive workpieces transported. The predefined condition comprises a workpiece time threshold.

At the step of inputting 110 the time series data, the machine learning model comprises a machine learning ensemble method. The machine learning model may comprise a meta estimator. It may comprise a plurality of decision trees, for instance at least one thousand decision trees. Each decision tree may comprise a root node, a plurality of split nodes and a plurality of leaf nodes. The decision trees may be regression decision trees. The decision trees may be regression decision trees. The decision trees may comprise polynomials. The polynomials may be linear polynomials. Their equations form may be written as follows:

$$\text{Equation 1: } \hat{y}_i = \sum_j \theta_j * x_{ij}$$

where $x_{ij}$ is an input, and $\theta_j$ is a coefficient. Non-linear polynomials are considered as well.

The machine learning model may comprise a plurality of machine learning estimators, also designated as machine learning trained algorithms. The machine learning model may result in a combination of sub models, which receive weights.

The convolutional neural network algorithm comprises a RELU activation function. As an alternative, a sigmoid function may be used. The RELU activation function may ease computation. The sigmoid may increase the accuracy.

At the step of computing 108 operation data such as the time series data, said time series data comprise an arm status of the transporting arm. The arm status comprises a motion state and a still state. At the step of inputting 106 operation data such as the time series data, a time duration of a still state is used in order to compute the manufacturing data.

At the step of computing 108 the operation data such as the time series data, data related to the nodes are used, notably the temporal data. The temporal positions of the nodes are extracted from the animated digital representation.

The step of computing 108 operation data is preferably a step of computing operation data of the manufacturing system by means of the animated digital representation.

At the step of inputting 106 the video stream data in a convolutional neural network algorithm in order to generate a digital representation, said digital representation comprises at least one arm node representing an arm articulation between two adjacent segments. At the step of computing 108 the operation data, the data associated with the arm node is used for computing, obtaining, said operation data. Using such data promotes reliability and accuracy with a light model. The operation data comprise temporal data. The temporal data are time related data. It comprises time durations and/or time stamps.

As an alternative or in addition, at the step of inputting 106 the video stream data in a convolutional neural network algorithm in order to generate a digital arm representation, said digital arm representation comprises at least one arm portion with a volume.

At the step of computing 108 operation data such as the time series data, the time series data comprises buffer time series data defining the status of the buffer depending on time. The status comprises an empty status and a workpiece available status. The status may correspond to time related events. The step of computing 108 the operation data comprises measuring times or periods with of the animated digital representation.

At the step of computing 108 operation data such as the time series data, the time series data comprise arm time series data of the digital arm representation. The arm representation time series data comprises a still status and a motion status. At the step of inputting 110 the time series data, the arm representation time series data are injected in the machine learning algorithm. Then the output of the machine learning model is the manufacturing data. At the step of inputting 110 the operation data, the operation data are the input of the machine learning model, and the manufacturing data is the output. The step of computing 108 the operation data comprises assessing the status of a moving entity with the animated digital representation.

With respect to the first manufacturing station, or each manufacturing station, and/or the moving arm; the time series data comprise at least one of the following: a time duration since the last workpiece output, the manufacturing time duration of the last workpiece processed by said manufacturing station, the status of said manufacturing station, a time duration since the last interruption event, an event time duration of the last interruption event, a buffer status; and combinations thereof. The last interruption event may be a last break event. It may be a last failure event. It may result from a workpiece shortage, or a breakdown. The failure event may occur randomly. Thus, they imply random stops in the manufacturing station.

The buffer status may be a filling ratio. The filling ratio may be measured at the step of computing 108 the operation data. It corresponds to the ratio of the number of workpiece or sub parts divided by the maximum capacity. It may be a percentage. The step of computing 108 the operation data comprises computing a filing ratio based on the animated digital representation.

Preferably, at the step of computing the operation data, said operation data comprise distance data; at the step of inputting the operation data, the manufacturing data comprise distance variations. At the step of generating, the predefined condition comprises a distance variation threshold. The kinematic of the moving arm and/or the workpiece is analysed. The step of computing 108 the operation data comprises measuring the distance data with the animated digital representation. The step of inputting the operation data is preferably a step of inputting the operation data in a machine learning model and computing manufacturing data with the machine learning model and the operation data.

The operation data comprises a data dimension of at least: 6, or 8, or 12; and uncorrelated parameters with significant variations over a long observation period, for instance of at least: one day or one week. Thanks to the machine learning model, it becomes possible to compute the specific operation data and to obtain relevant and meaningful manufacturing data. Reliable conclusions are drawn from said manufacturing data. In the context of the invention, the decision trees have proven to offer reliable results. The regression decision trees offer accurate results.

The moving arm may comprise a manufacturing tool, preferably at the arm end. At step of inputting 106 the video stream data, the arm digital representation comprises a digital representation of said arm end.

The invention is adapted for detecting the moving arm, and providing a simplified model of said arm. Thus, the workpiece sequence is deduced in each manufacturing station. Down-times which are independent from a specific station are subtracted from its own manufacturing time. Then, the invention offers a close model associated with each manufacturing station. In other words, the invention relies on a global observation of a manufacturing system, separates the stations, and infers station specific information useful for simulation at the system scale. The invention removes inner bias, and bias from the system environment. The invention involves an adaptive filter, which is adapted to the system configuration.

Features defined in relation with a moving arm may be generalised to any moving entity of the manufacturing station. By way of illustration, the associated features also apply to the workpiece and to any moving entity of the manufacturing stations.

At the step of simulating 120, the workpiece is the same as the workpieces manufactured during the step of obtaining 100 the video stream data. The workpiece(s) may be a reference workpiece, or an observed workpiece.

At the step of computing 124 a workpiece manufacturing time T2, the workpiece manufacturing time is a second workpiece manufacturing time. The simulation process further comprises a step of computing 126 a first workpiece manufacturing time T1 corresponding to the observed configuration. The simulation process further comprises a step of comparing 128 the first workpiece manufacturing time T1 and the second workpiece manufacturing time T2.

Depending on the result, the storing occurs. If the difference between the manufacturing times (T1; T2) is significant, the signal is sent at step generating 130. The signal may comprise a display signal for displaying the test configuration. The signal may comprise a storing signal for storing the test configuration on data storage.

As an option, the manufacturing data comprise workpiece transporting time between the manufacturing stations, optionally by the transporting arm or a conveyor.

As a further option, the manufacturing data comprise workpiece processing times by the manufacturing stations. In addition or as an alternative, the manufacturing data comprise at least one station processing time during which a workpiece is processed by the one corresponding manufacturing station.

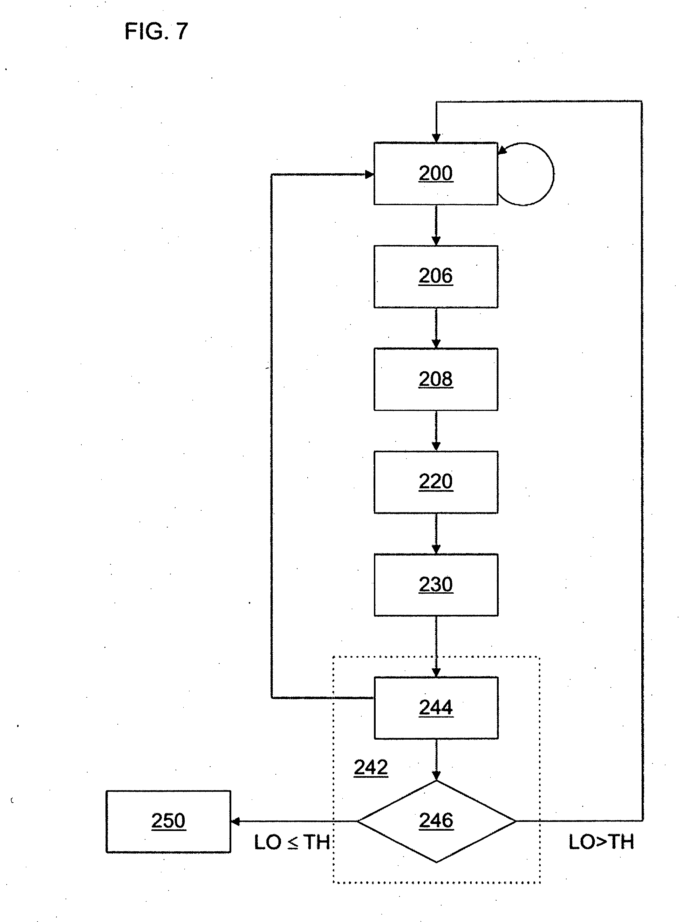

Figure 7 provides a diagram of a training process in accordance with the invention. The simulation process is adapted for simulating the operation of a manufacturing system which is similar or identical to those as detailed in relation with the previous figures. The simulation enables the simulation of the manufacturing of a workpiece, such as a workpiece of reference, but with another manufacturing configuration.

The training process may comprise the following steps:

o obtaining 200 video stream data, from the vision means, of a moving entity in the manufacturing system; for instance of the moving arm exhibiting a first end cooperating with the workpieces one after the other;
o inputting 206 the video stream data in a convolutional neural network algorithm in order to generate an arm digital representation of the moving entity;
o computing 208 operation data, such as time series data and/or distance data; of the manufacturing system by means of the digital representation in order to generate training operation data and test operation data;
o training 240 the machine learning algorithm, in order to obtain a machine learning model, by means of said training operation data;
o testing 242 the machine learning model, with test operation data;
o storing 250 the machine learning model if a loss meets a predefined criterion, or resuming step obtaining 200 video stream data.

The steps of computing 208 the operation data and training 240 the machine learning algorithm, may be executed with respect to the moving arm and/or to each manufacturing station.

At the step of obtaining 200 the video stream data, the video stream data may be acquired during one week. Four day of video stream data may be used for the training data of the step of testing 242, and one day may be used for the test data of the step of testing 242. A video stream of one week is enough for generating a satisfying machine learning model with an accuracy of at least 90% on the test data. A video stream of one month may be used in order to increase further the accuracy. The operation data preferably comprise temporal data.

At the step of computing 208 the operation data, the training data is computed for at least one manufacturing station, or each of the manufacturing stations. For each manufacturing station, the training data enclose a combination of the following parameters:

- a time duration since the last workpiece processed by said manufacturing station,
- the manufacturing time duration of the last workpiece processed by said manufacturing station,
- the present status of said manufacturing station,
- a time duration since the last event, preferably for each category;
- an event time duration of the last event, preferably for each category
- a buffer status.

The above categories associated with events may correspond to event associated with the system as such: the inner events; and to event associated with the environment of the system: the outer events.

The training data, notably the operation data, comprise a dimension of at most 20. The training data, and/or the operation data comprise a dimension of at least: 5, or 6, or 8, or 10, or 12, or 15. Hence, this data comprise a large dimension which requires specific analysis tools.

The events as mentioned above include failures, broken parts, missing pars, a congestion; such as an inner congestion or a downstream congestion.

At the step of training 240 the machine learning model, an extreme gradient boosting method is used. The machine learning model may comprise a plurality of weak learner algorithms, and weights associated with the weak learner algorithms. The extreme gradient boosting offers an accurate result, and converges quickly toward a satisfying result, despite the complexity of the operation data which derives at least from: the dimension, the variation, and length of the video stream.

The training process may comprise a step of filtering 232. The step of filtering 232 may be configured in order to bound the error. The training process may comprise a step of removing outliers.

The loss "LO" may be upper bounded by a number "M". The training process may comprise computing a machine leaning algorithm stability, notably an algorithmic stability. At the step of storing 250 the machine learning model, the machine learning model may meet a generalisation condition.

The step of training 240 the machine learning model may comprise the use of a Bayesian Optimisation, BayOpt. The Bayesian Optimisation comprises several entities: a Bayesian statistical model for modelling the objective function, and an acquisition function for deciding where to sample next.

The step of training 240 may be an unsupervised learning. Then, the training data is unlabelled. By comparison, the machine learning model automatically outputs extreme values associated with the arm digital representation. It may identify uncommon operation data, or classify operation data depending on one parameter of the manufacturing data.

The step of training 240 may comprise the use of light boosted trees. The machine learning algorithm may comprise thousands of different trees. The light boosted trees solution offers an accurate solution in the context of the invention. Adaptative boosting, Adaboost, may be used. The step of training 240 comprises a sub step of comparison by means of dynamic time wrapping in order to compare the manufacturing data with respect to the predefined condition.

The step of training 240 may comprise a step or sub step of ensemble learning. During ensemble learning, several sub algorithms are computed, and combined. The machine learning model comprises a machine learning ensemble.

The step of testing 242 the machine learning model may comprise a step of computing 244 a loss LO. The loss may be a loss LO associated with the test operation data and the trained machine learning algorithm. The loss LO may be an error. The step of testing 242 the machine learning model may comprise a step of comparing 246 of the loss with a loss threshold TH.

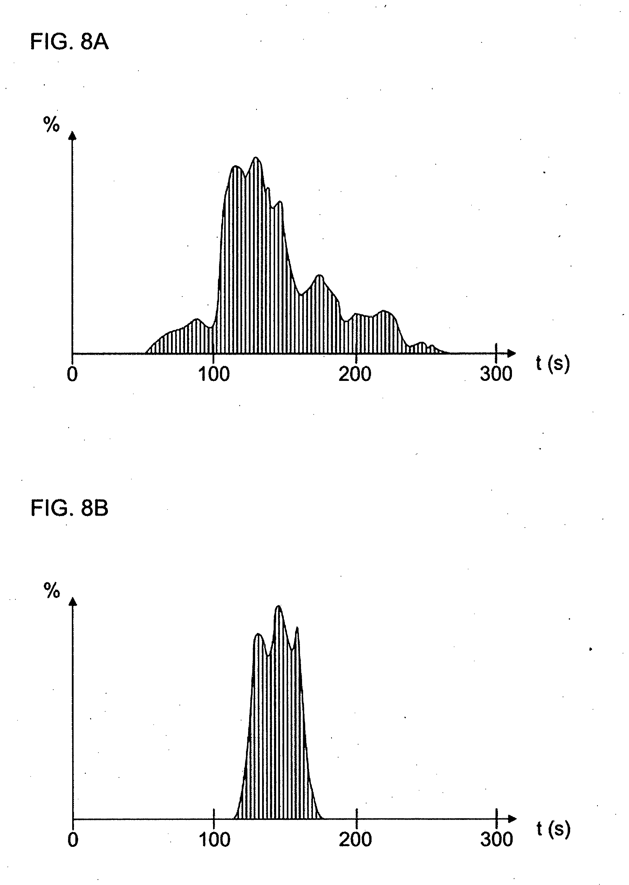

If a loss meets a predefined criterion, for instance if the loss is smaller than the loss threshold TH, step storing 250 is executed. Then, the machine learning model is actually stored. It may be selected. It may be used for monitoring the manufacturing system, in the associated configuration. Figure 8A provides a graph illustrating observed cycle times corresponding to a manufacturing station in a manufacturing system. The observed cycle times of the manufacturing system is measured by means of video stream data, for instance as acquired in a step of obtaining 100, 200 the video stream data of the processes in accordance with the invention.

The current graph illustrates different cycle times measured during one week for one of manufacturing stations of a manufacturing system. The graph represents the proportions of cycle times depending on their manufacturing time durations. The presented manufacturing times last from 50 s to 275 s. As we may notice, the proportions exhibit different proportion peaks. The maximum proportion occurs at about 130 s. The standard deviation is high. This deviation with respect to the average value may be due to irregular workpiece supply upstream and/or clogging downstream. The current cycle times depend on the other manufacturing stations, and on the environment. Hence, the current graph underlines, highlights, how complex the behaviour of one isolated manufacturing station is. Such graph is obtained for each manufacturing station of the manufacturing system.

Figure 8B provides a graph illustrating manufacturing data as computed by a machine learning model as implemented in the simulation process in accordance with the invention. The current manufacturing data is computed by means of the video stream data as presented in figure 8A. The manufacturing data may comprise probability data, for instance probabilities of cycle times.

The current graph offers a distribution of manufacturing data, for instance of cycle times, of one of the manufacturing stations as presented in the previous figures. The current distribution represents, for different cycle times, the corresponding proportions. The proportions are provided in percentages (%), and the cycle times in seconds (s).

As it may be observed, the highest proportion is at about 150 s. This highest proportion differs from the one obtained in figure 8A. The average value differs as well. The cycle times range from 130 s to 170 s. The standard deviation is smaller than in the illustration of figure 8A.

It is noteworthy to underlines that the cycle times in figures 8A and 8B are obtained from the same input data: the video stream data of one same week, for a same manufacturing station. However, the cycle times differ on different aspects. The invention offers a narrower time range, and a different maximum proportion. It limits the number of peaks, and the standard deviation becomes smaller. The manufacturing data in accordance with the invention is more reliable.

It may be deduced that the invention, through its selected machine learning model, filters events from the environment. The invention isolates a manufacturing station of interest, and computes an associated cycle time probability or distribution, in a configuration where all surrounding entities work in an ideal, perfect mode.

Then, the invention offers unbiased data matching the true capacities of each manufacturing station of an investigated manufacturing system. The invention outputs accurate statistics useful for monitoring said manufacturing system.

Features defined in relation with operation data also applies to time series data and to distance data and generally to temporal data.

It should be understood that the detailed description of specific preferred embodiments is given by way of illustration only, since various changes and modifications within the scope of the invention will be apparent to the person skilled in the art. The scope of protection is defined by the following set of claims.

**Claims**

1. A simulation process of a manufacturing system (2) comprising a plurality of manufacturing stations (8) which are configured for manufacturing workpieces (4); **characterized in that** the simulation process comprises the steps of:

   o inputting (110) operation data of the manufacturing system (2) in a machine learning model in order to compute manufacturing data of the manufacturing stations (8);
   o obtaining (112) a test physical configuration of the manufacturing system (2);
   o simulating (120) the plurality of manufacturing stations (8) of the manufacturing system manufacturing a workpiece depending on the manufacturing data, wherein the manufacturing system is arranged in the test physical configuration.

2. The simulation process in accordance with claim 1, wherein the simulation process further comprises a step of computing (108) the operation data of the manufacturing stations by means of an animated digital representation (22) associated with at least one moving entity in the manufacturing system (2), preferably with a plurality of animated digital representations of the plurality of manufacturing stations (8).

3. The simulation process in accordance with claim 2, wherein the simulation process further comprises a step of obtaining (100) video stream data of workpieces each manufactured by the plurality of manufacturing stations (8) of the manufacturing system (2), said manufacturing system (2) being arranged in an observed configuration; and a step of inputting (106) the video stream data in a convolutional neural network in order to generate the digital representation (22).

4. The simulation process in accordance with claim 3, wherein at the step of obtaining (100) the video stream data, the observed configuration comprises a first set of distances between the manufacturing stations (8); and at the step of obtaining (112) the test configuration, the test configuration comprises a second set of distances between the manufacturing stations (8), the second set being different from the first set of distances.

5. The simulation process in accordance with any of claims 3 to 4, wherein at the step of obtaining (100) the video stream data, the observed configuration comprises a first orientation set of manufacturing station orientations; and at the step of obtaining (112) the test configuration, the test configuration comprises a second orientation set of manufacturing station orientations, the second orientation set being different from the first orientation set.

6. The simulation process in accordance with any of claims 3 to 5, wherein at the step of obtaining (100) the video stream data, in the observed configuration, the manufacturing system (2) comprises a first number of manufacturing stations (8); and at the step of obtaining (112) the test configuration, the manufacturing system (2) comprises a second number of manufacturing stations which is different than the first number.

7. The simulation process in accordance with any of claim 2 to 5, wherein the at least one moving entity comprises a moving arm, such as a manufacturing arm or a transporting arm, cooperating with the workpiece(s); at the step of inputting (106) the video stream data, the digital representation comprises a moving arm digital representation (22); preferably the operation data comprise arm representation operation data of the digital arm representation (22), at the step of inputting (110) the operation data, the arm representation operation data are inputted in the machine learning model in order to compute the manufacturing data.

8. The simulation process in accordance with claim 7, wherein the simulation process comprises a step of identification (102) of the moving arm (10), and isolation (104) of the moving arm (10) from the environment.

9. The simulation process in accordance with any of claims 7 to 8, wherein at the step of inputting (106) the video stream data, the digital arm representation (22) comprises at least one arm node (22N) associated with an arm articulation (10A).

**10.** The simulation process in accordance with any of claims 1 to 9, wherein the operation data comprise time series data, and the manufacturing data comprises cycle times; preferably the time series data comprise, with respect to at least one manufacturing stations of the plurality of manufacturing stations: the time duration since the last workpiece output, or the last manufacturing time duration, or a manufacturing station status such as a buffer status, or a time duration since the last interruption event, or the time duration of the last interruption event; and any combination thereof.

**11.** The simulation process in accordance with any of claims 1 to 10, wherein the operation data comprises distance data, said distance data comprising distances (Di-j) between manufacturing stations (8i-j) of the plurality of manufacturing stations (8).

**12.** The simulation process in accordance with any of claims 1 to 11, wherein the manufacturing data comprise workpiece processing times by the manufacturing stations (8); and/or the manufacturing data comprise at least one station processing time during which a workpiece (4) is processed by the corresponding manufacturing station.

**13.** A simulation system (6) of a manufacturing system (2) comprising a plurality of manufacturing stations (8) which are configured for manufacturing workpieces; the simulation system comprising vision means (12) configured for acquiring a video stream data of the manufacturing system (2); and computing means (14; 20) configured for:

o inputting operation data of the manufacturing system in a machine learning model in order to compute manufacturing data of the manufacturing stations (8) in accordance with an observed configuration;
o obtaining a test physical configuration of the manufacturing system (2);
o simulating the plurality of manufacturing stations of the manufacturing system manufacturing a workpiece depending on the manufacturing data, wherein the manufacturing system is arranged in the test physical configuration; the computing means (14; 20) preferably being configured for executing the simulation process in accordance with any of claims 1 to 12.

**14.** A computer program comprising computer readable code means, which when run on a computer (20), cause the computer to run the simulation process in accordance with any of claims 1 to 12.

**15.** A computer program product including a computer readable medium (16) on which the computer program according to claim 14 is stored.

FIG. 1

FIG. 2

FIG. 3

FIG. 4

FIG. 5

FIG. 6

FIG. 7

FIG. 8A

FIG. 8B

Europäisches
Patentamt

European
Patent Office

Office européen
des brevets

# EUROPEAN SEARCH REPORT

**Application Number**

EP 22 31 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 811 074 B1 (AICHELE FABIAN [DE] ET AL) 7 November 2017 (2017-11-07) * the whole document * ----- | 1-15 | INV. G05B19/418 ADD. G05B13/02 B25J9/16 |
| X | US 2020/278657 A1 (PUTMAN MATTHEW C [US] ET AL) 3 September 2020 (2020-09-03) * the whole document * ----- | 1-15 | |

**TECHNICAL FIELDS SEARCHED (IPC)**

G05B
B25J

The present search report has been drawn up for all claims

| Place of search | Date of completion of the search | Examiner |
|---|---|---|
| Munich | 2 September 2022 | García Bolós, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5086

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | | Publication date | Patent family member(s) | | Publication date |
|---|---|---|---|---|---|
| US 9811074 | B1 | 07-11-2017 | NONE | | |
| US 2020278657 | A1 | 03-09-2020 | CN | 113454548 A | 28-09-2021 |
| | | | EP | 3908892 A1 | 17-11-2021 |
| | | | JP | 2022522436 A | 19-04-2022 |
| | | | KR | 20210133250 A | 05-11-2021 |
| | | | TW | 202034231 A | 16-09-2020 |
| | | | US | 10481579 B1 | 19-11-2019 |
| | | | US | 2020278657 A1 | 03-09-2020 |
| | | | US | 2022043420 A1 | 10-02-2022 |
| | | | WO | 2020176137 A1 | 03-09-2020 |

EPO FORM P0459

For more details about this annex : see Official Journal of the European Patent Office, No. 12/82

**EP 4 075 221 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9811074 B1
- US 2020278657 A1

**Non-patent literature cited in the description**

- **KEVIN P. MURPHY.** *Machine Learning_ A Probabilistic Perspective,* 24 August 2012, ISBN 978-0-262-01802-9